# EUROPEAN PATENT APPLICATION

(11) **EP 1 375 130 A1**
(43) Date of publication of application: **02.01.2004**
(21) Application number: 03012873.0
(22) Date of filing: 06.06.2003
(51) Int. Cl.: B32B 9/00, E04F 13/14

(54) **Process and plant for obtaining a composite panel of natural stone and glass**

(30) Priority: 19.06.2002 IT TV20020069
(71) Applicant: TONCELLI, Marcello, 36061 Bassano Del Grappa (Vicenza) (IT)
(72) Inventor: TONCELLI, Marcello, 36061 Bassano Del Grappa (Vicenza) (IT)
(74) Representative: Agostini, Agostino

(57) **Abstract**

In a process for obtaining a composite panel of natural stone and glass, after preparing a slab of natural stone (10) and a glass sheet (20), a layer of hardening resin (32) is spread over a surface (10a) of the stone slab (10), the glass sheet (20) is arranged on top of said stone slab (10) inside an environment under vacuum conditions so as to allow the layer (32) of resin which is situated in between to harden completely. The process may be continued by applying a second glass sheet (24) onto the other surface (10b) of the stone slab (10) using the same procedure and by finally cutting the panel thus formed (50) along the mid plane so as to obtain two panels, each of which comprises a stone slab (10) and a glass sheet (20, 24).

## Description

The present invention relates to a process and a plant for obtaining a composite panel comprising a slab of natural stone joined to a glass sheet or panel.

It is known to manufacture composite panels thus formed, by performing the following steps:
a) preparation of a slab of natural stone, which may be for example marble, granite and the like;
b) preparation of a glass sheet or glass pane;
c) spreading a layer of hardening resin over one surface of the slab of natural stone;
d) arrangement of the glass sheet on top of the slab of natural stone so that that said layer of hardening resin is situated in between the stone slab and the glass sheet;
e) catalytic hardening of the resin.

This results in the formation of composite panels which combine in the best possible manner the properties of the two materials: natural stone and glass.

In fact, natural stone, and in particular marble, have excellent aesthetic properties, but on the other hand, in particular when exposed to bad weather conditions, are subject to deterioration which adversely affects their properties and may also result in cracking. Glass, on the other hand, withstands very well poor atmospheric conditions and therefore, if combined with the stone slab, allows the latter to maintain its properties over time.

Moreover, a composite panel of stone and glass forms a strong and extremely attractive architectural component which has various uses, not only as a lining for the interior and exterior, but also as a furnishing, as for example in the case of tops for large and small tables.

It is obvious that a very delicate step consists precisely in the operation of joining together the slab and the glass sheet, which must ensure perfect bonding between the said slab and sheet to be joined.

A drawback is that, during the joining step, air may remain trapped in the joining zone between the slab and glass sheet, thus creating air pockets which negatively affect both stable bonding between the slab and sheet - and therefore the mechanical properties of the resulting panel - and the aesthetic appearance of the end product.

Another problem consists in that, in order to ensure adhesion over the entire contact surface between the slab and glass sheet, an extra amount of resin is used during the spreading step; unfortunately, this use of an excess amount of resin results in a layer of plastic material of considerable thickness which adversely affects the sealing capacity of the joint. It should be noted that the excessive quantity of resin also increases substantially the final cost of the end product thus manufactured.

As mentioned above, a composite stone/glass panel may also be used for external applications. However, the ultraviolet rays from solar radiation may alter the transparent colour of the hardening resin which tends to yellow, thus negatively affecting the aesthetic appearance of the end product.

The main object of the present invention is developing a process which is able to overcome the abovementioned drawbacks, and in particular to prevent air remaining trapped in the joining zone between the slab and glass sheet to be joined together. Moreover, the invention will permit the use of strictly the amount of resin required, not only to limit the cost of the end product, but even more to keep the thickness of the intermediate layer of resinous adhesive as small as possible, thus ensuring a more effective joint.

A further object of the invention is of implementing a process which is able to produce composite panels where the slab of marble is thin, limiting however at the same time the quantity of stone material used.

Finally, another object is that of preventing, in the case of extemal applications, the layer of resinous adhesive from yellowing on account of ultraviolet radiation.

These objects are achieved by a process as above described, namely a process for obtaining a composite panel comprising a slab of natural stone joined to a glass sheet or pane, which envisages the following steps:
a) preparing a slab of natural stone;
b) preparation of a glass sheet or pane;
c) spreading a layer of hardening resin over a surface either of said stone slab or of said glass sheet;
d) joining the sheet or slab without resin on it to the slab or sheet, over a surface of which the resin has been spread, so that said layer of hardening resin is situated between the stone slab and the glass sheet;
e) hardening of the resin;
and is characterized in that the step d) of joining together the slab and sheet is performed in an environment under vacuum conditions, so as to eliminate the risk of air being trapped and to ensure perfect bonding between the slab and sheet to be joined together.

In a preferred mode of implementation of the invention, in step a) the surfaces of the stone slab to be joined to a glass sheet (which is always flat) are levelled so as to reduce the quantity of resin used and ensure an improved adhesion between the slab and sheet to be joined together.

In a first and preferred mode of implementation of the invention, the step of joining together the slab and sheet, consisting of natural stone and glass, respectively, is performed in two steps, namely:
a) the sheet without resin is arranged above the slab provided with the layer of resin to be hardened so as to obtain a sandwich assembly in which a predetermined gap exists between the two facing surfaces of the slab and of the glass sheet remain, and
b) the aforementioned sandwich assembly is introduced into an environment where a very intense vacuum is established - basically the maximum vacuum compatible with an industrially acceptable process - and, while maintaining said vacuum conditions, the facing surfaces of the slab and sheet forming the said assembly are moved towards each other until complete contact is established, following which hardening of the layer of resin remaining between the two said surfaces is performed.

During the practical implementation of this embodiment it is preferred to arrange in predetermined positions, for example along the two longitudinal edges of the slab and sheet, suitable removable spacer elements on top of which during the first joining step - namely when the sandwich assembly is formed - the sheet without resin on it is laid. Once the sandwich assembly has been introduced into the environment under vacuum conditions, a mechanical removal of the spacers is performed so that the upper glass sheet rests on the bottom slab, mating fully and perfectly with the same while no air remains trapped between the surfaces in mutual contact.

With regard, however, to obtaining composite panels - where the slab of natural stone has a limited thickness - without a big amount of scraps and hence a wastage of material, firstly a glass sheet is applied, using the above described process, on one side and then on the opposite side of a stone slab of suitable thickness, i.e. greater than twice the desired thickness of the stone slab comprised in the composite panel, and the stone slab is then cut along the mid plane of its thickness, resulting in two composite panels, each of which comprises a stone slab of very small thickness.

In order to eliminate the unwanted effect of the resin yellowing when subject to ultraviolet rays, it is preferable to use stratified glass, which is known *per se*, namely a glass composed of two or more glass sheets or panes with a layer of polymer arranged in between each pair of sheets, the layer of polymer having the property of preventing the passage of ultraviolet rays. In this way not only is the glass pane made much stronger so as to reinforce the composite panel, but the interposed layer of polymer is able to filter and block out the ultraviolet radiation, eliminating the yellowing effect described above.

The invention also relates to a plant for the production of such a composite panel with:
- a station where a sandwich assembly is obtained that comprises a slab of natural stone, a glass sheet or pane and a layer of hardening resin applied onto either a surface of said slab or of said sheet and
- a subsequent station for hardening the resin,
which is characterized by an intermediate station which is able to keep the said sandwich assembly under vacuum conditions for the whole of the time during which the facing surfaces of the said slab and sheet, between which the said layer of hardening resin is situated, are moved towards each other and brought into full contact.

The abovementioned advantages of the present invention, together with others, will emerge more clearly from the detailed description, which is provided herebelow as a non-limiting example with reference to the accompanying drawing where:
- Figure 1 is a perspective view of a slab of natural stone;
- Figure 2 is a perspective view of a stratified or multilayer glass sheet or pane;
- Figure 3 is a perspective view showing the stone slab of Figure 1 on which a layer of hardening resin has been spread;
- Figure 4 is a perspective view of the composite panel resulting from the stone slab of Figure 3 joined to the glass sheet of Figure 2;
- Figure 5 is a perspective view of the composite panel according to Figure 4 with a second glass sheet joined thereto;
- Figure 6 is a perspective view of the end product resulting from the panel of Figure 5 when this is cut along the mid plane of its thickness;
- Figure 7 is a partial top view of a plant for manufacturing a composite panel according to the invention; and
- Figure 8 is a cross-sectional view of the station for joining together the slab and sheet which is a characterizing feature of the said plant, this station being shown split into two halves in order to better illustrate the functionality of this station.

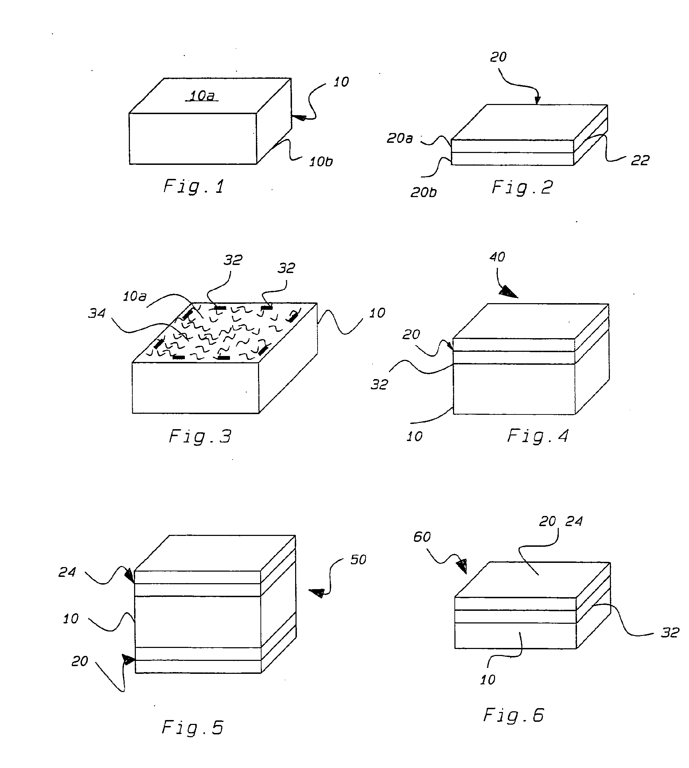

In Figure 1 reference number 10 denotes a slab of natural stone such as, for example, marble or granite. The stone slab 10 has an upper side 10a and a bottom side 10b which are opposite to each other and which are both levelled and dried so as to eliminate any residual water for the reason to be clarified here below.

Figure 2 shows a glass sheet or pane 20 of a size similar to the size of the stone slab 10 and consists of two individual glass sheets 20a,20b between which a layer of polymer material 22 opaque to ultraviolet rays, for example polyvinylbutyral, is arranged so as to obtain a stratified glass pane. The glass pane 20 not only is very strong, but has the property of filtering the ultraviolet rays, this property being a main feature of the invention as will emerge below.

According to the process of the invention, a layer of hardening resin 32 is uniformly spread - as shown in Figure 3 - on the upper surface 10a of the stone slab 10, which has previously been levelled and dried. Epoxy resin is preferably used since it is a very adhesive type of resin which, during hardening, undergoes limited - and therefore negligible - shrinkage, avoiding warping of the end product, which is clearly undesirable.

The reason why, according to the prior art, an excess amount of resin is used derives from the circumstance that the slabs of natural stone are usually obtained in a preceding block sawing station, from where the slabs come out with a slightly curved surface which prevents the stone slab to mate perfectly with the glass sheet. As a consequence the said excess amount of resin is sufficient to compensate for this slight concavity or convexity of the stone slab when it is joined to a glass sheet which is instead perfectly flat. The levelling of the natural stone slab foreseen by the present invention eliminates this problem of the known technique. Drying, on the other hand, is preferred since the stone slab obtained from the block sawing station is normally wet and water prevents a proper application and in particular an optimum hardening of the epoxy resin.

Therefore, due to the upper surface 10a of the stone slab 10 being levelled, the amount of resin required for joining it to the glass sheet 20 is minimum, thereby reducing the cost of the end product and ensuring a more effective bonding in view of the small thickness of the resin. Figure 3 also shows spacer elements 34, upon which the glass sheet 20 is to be laid, positioned along the peripheral edge of the surface 10a of the stone slab 10.

The sandwich assembly consisting of the stone slab 10 with the resin layer 32 and the glass sheet 20 laid upon the spacers 34 is introduced into an environment where an intense vacuum is created of the order of no more than 30 mm Hg residual pressure. The spacers 34 are then removed so that the glass sheet 20 rests on the slab 10 in such a way that its surface 20a is superimposed exactly on the surface 10a of the stone slab 10. The vacuum, also thanks to the spacer elements 34, eliminates the risk of air remaining trapped between the slab and sheet, thereby ensuring a perfect and complete bonding effect by the resin layer 32 existing in between.

Since the spacer elements 34 are removed under vacuum conditions, the glass sheet 20 rests resin layer 32 without the risk of formation of bubbles or voids. The result of the above described steps is the composite panel 40, shown in Figure 4, which is left to rest for the time needed for the resin to harden.

Optionally and preferably, depending on the nature of the resin, hardening may be promoted or favoured by the application of heat.

Subsequently, the panel 40 is overtumed and the above described operation is repeated for bonding of a second glass sheet 24, so as to obtain a composite panel 50 - as shown in Figure 5 - consisting of the stone slab 10 with two glass sheets 20 and 24 joined thereto.

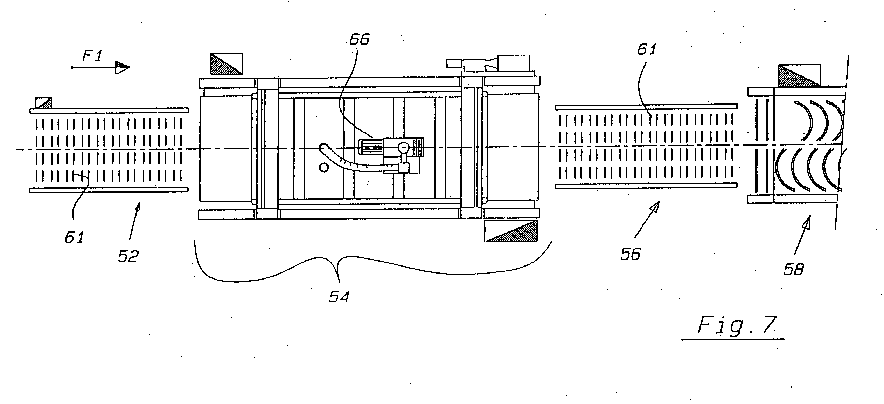

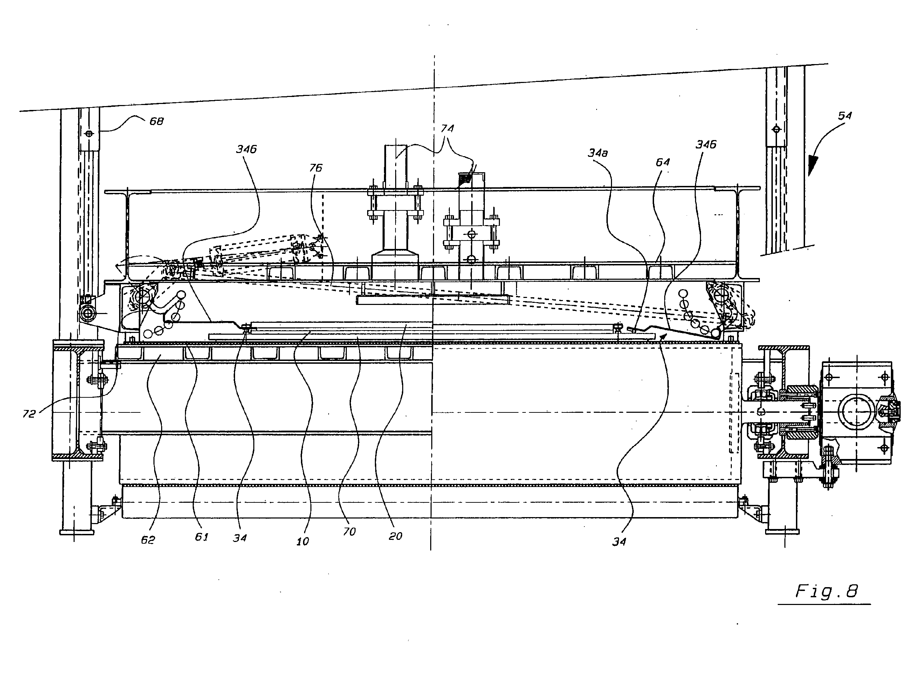

With reference now to Figures 7 and 8, which a plant for implementing the process according to the invention is partially illustrated, Figure 7 shows in succession the following stations:
(i) a station 52 for preparing and introducing the sandwich assembly comprising the stone slab 10, with a thin layer 32 of hardening resin spread on the surface 10a thereof, the spacers 34 and the glass sheet 20 placed in a manner that its surface 20b lies upon said spacers;
(ii) a station 54 for joining together under vacuum conditions the stone slab 10 and the glass sheet 20, an exit station 56 beig associated to said joining station 54; and
(iii) a hardening station 58, optionally in the form of a tunnel oven.

A belt-type conveyor 61 is envisaged for transporting and feeding in an intermittent movement the slab 10 and sheet 20 into the joining station 54, said conveyor being driven in the direction of arrow F1 shown in Fig. 7 and provided with motor means which are suitably controlled for ensuring the said movement.

With reference now to Figure 8, a machine bed 62 with which a vacuum-sealed bell 64 co-operates, said bell being movable between a raised position and a lowered or operative position.

In the raised position the bell 64 allows the entry of a sandwich assembly (as defined above) supplied from an upstream station 52 and the exit of a semifinished product (i. e. a composite panel in which the resin layer has not yet hardened) towards the downstream station 58.

In the lowered position a vacuum pump 66 (shown in Fig. 7) creates inside the bell 64 an intense vacuum, under the conditions described above, and therefore a virtual absence of air.

A cylinder mechanism is envisaged, denoted overall by the reference number 68, for displacement of the bell 64 between the two aforementioned positions.

A support plate - preferably made of steel and designated by the reference numeral 70 - ensures the transfer movements between the various stations and is arranged between the conveyor belt 61 and the bottom surface of the stone slab 10 in the sandwich assembly.

Figure 8 shows an embodiment of the spacers 34 in the form of levers which are pivotably mounted on mushroom-like pins projecting from the upper surface of the support plate 70. Each lever comprises a short arm 34a, which is adapted to be inserted between the two edges respectively of the stone slab 10 and the glass sheet 20, and a longer arm 34b, projecting outwards.

An extraction bracket mechanism is engageable with the arm 34b, said mechanism comprising shaped arms 72 which can be actuated by means of actuating cylinders 74 acting on a frame 76 for the support of the arms 72.

When the cylinders 74 are actuated, the frame 76 causes the arms 72 to engage with the corresponding lever arm 34b, causing the latter to pass from the engaged position shown in the left-hand part of Fig. 8 into the disengaged position shown in the right-hand part of the same figure. Therefore the sheet 20 rests onto the slab 10, or more precisely onto the resin layer which covers the surface 10a of the slab 10. Obviously, in this way there is no possibility for air bubbles to remain trapped between the slab 10 and the sheet 20.

From Fig. 8 it can also be understood how, prior to extraction of the spacers 34, the stone slab 10 is situated at about 4-6 mm from the glass sheet 20, this value being chosen depending on the dimensions of the glass sheet. In fact the glass sheet, resting solely on the lateral spacer supports 34, is inevitably subject to bending in its central portion, albeit to a very slight degree.

As an alternative to the solution shown in Figures 7 and 8 it is possible to envisage that, instead of forming a sandwich assembly, as defined above, outside the station 54, the stone slab with the layer of hardening resin is introduced into the bell which is under vacuum conditions and a glass sheet is placed on the layer of resin and on the upper surface of the stone slab inside the bell itself.

As already mentioned, with the process according to the invention, it is possible to obtain a composite panel 50 which is then sawn along the mid plane of the stone slab 10, thus resulting in two composite panels consisting of a thin stone slab 10 and a glass sheet 20 respectively 24.

It is clear that, in this way, it is possible to obtain a small thickness, for example 6 mm, or even less, of the stone slab with a significant reduction in scrap material. In fact, it should be considered that, in order to obtain the said small thickness values when bonding the glass to one side only of the stone slab, it is necessary to start from a stone slab with a standard thickness of 20 mm and to level it until a final thickness of 6 mm is obtained. On the contrary, according to the process the present invention, when use is made of a stone slab having a thickness of 20 mm and a glass sheet is bonded to both surfaces of the slab, after the latter has been cut along it mid plane, two panels are obtained where the slab of marble has a thickness of about 7 mm (considering that cutting removes about 5 mm). After the levelling and smoothing operation, where at least another millimeter of thickness is removed, the stone slab has a thickness of about 5-6 mm in the end product.

The amounts of scrap produced in the above cases are easily appreciated : in fact, when starting from a 20 mm stone slab, in the first case a single composite panel is obtained, while in the second case two composite panels are obtained. Moreover, in the first case it also necessary to take into consideration the time and cost of processing required in order to reduce the thickness from 20 mm to 6 mm or even less.

It is also possible to obtain even thinner slabs, for example of a 4 mm thickness, so as to obtain an attractive transparent effect of the stone.

As already mentioned, levelling of the surfaces 10a,10b of the stone slab 10 is necessary in order to limit as far as possible the amount of resin used, reducing the cost of the end product and creating a thin layer of resinous adhesive which allows an effective bonding between the stone slab 10 and the glass sheet 20, which is always perfectly flat.

Moreover, the resin penetrates into the fissures and natural microscopic cracks in the stone, which is consequently consolidated and strengthened. It should also be considered that such a result is favoured by the fact that the joining step is performed in a vacuum environment and absence of air makes easier for the resin to penetrate into the cracks and fissures of the stone.

The process of the invention also allows the use of high quality materials (Irish green marble, Portuguese pink marble, Calacatta, etc.) which are valued precisely because of their special veined appearance. It is also possible to envisage treating beforehand the surface of these materials with resin before starting the actual process.

Drying of the stone slab 10 allows the resin to perform at the best its function as bonding means during the hardening stage.

Moreover, again with the aim of achieving an optimum bond between the sheet and slab, the surface 20a of the glass sheet 20 which is joined to the stone slab is roughened beforehand, for example sandblasted, so as to favour the bonding of the resin.

It should be noted that sandblasting of the glass sheet makes the glass opaque, but once the glass sheet has been joined to the stone slab and the resin has hardened completely, the latter assumes a glass-like appearance, thus restoring the transparency of the glass.

Again, for the same reason, the stone slab 10 may be heated so as to favour the hardening reaction of the resin and consequently reducing the processing time of the end product.

The use of stratified glass allows the production of a composite panel which is extremely strong and at the same time prevents the ultraviolet radiation from passing through, thus eliminating the risk that the resin may yellow.

It is worth noting that, according to the known technique for making conglomerate products (in the form of slabs) from a mixture of an inert material in granular or particle form with a cement or resinous binder, in the past times as well as nowadays, the common practice is to deaerate the mixture is before the forming operation, in order to reduce the porosity of the end product and favour an intimate bonding of the granules or particles by the binder, thus eliminating or reducing the discontinuities due to air bubbles or pockets.

In the case of the present invention, however, the use of vacuum permits to avoid either entirely, or at least in a sufficient manner for practical purposes, the presence of air bubbles or pockets when joining together the slab and sheet which form the composite end panel, in such a way that there is no possibility for the air to remain trapped in the joint between the slab and sheet.

It is obvious that variations or changes which are functionally or conceptually equivalent to the described process or plants fall within the scope of the appended claims.

For example, it is possible to use stratified glass composed of three or more glass sheets.

## Claims

1. Process for obtaining a composite panel comprising a slab of natural stone (10) joined to a glass sheet or pane (20), which envisages the following steps:
a) preparation of a slab of natural stone (10);
b) preparation of a glass sheet or pane (20);
c) spreading a layer of hardening resin (32) over a surface either of said stone slab (10) or of said glass sheet (20);
d) joining the sheet or slab without resin to the slab (10) or sheet (20), over a surface of which the resin (32) has been spread, so that said layer (32) of hardening resin is situated between the stone slab (10) and the glass sheet (20);
e) hardening of the resin (32),
and **characterized in that** the step d) of joining together the slab and the sheet (10, 20) is performed in an environment under vacuum conditions, so as to eliminate the risk of air being trapped and thus ensuring perfect bonding between the slab and sheet (10, 20) to be joined together.

2. Process according to Claim 1, **characterized in that**, before arranging the slab and sheet (10,20) on top of each other, spacer elements (34) are provided so as to keep the slab and sheet (10,20) to be joined at a distance from each other, said spacer elements (34) being later removed in said environment under vacuum conditions, so as to cause the slab and sheet (10, 20) to come into contact with each other and thus ensure a complete elimination of the air in the joining zone between the slab and sheet (10, 20).

3. Process according to Claim 1, **characterized in that** the layer (32) of hardening resin is spread over one surface (10a) of the stone slab (10) and the glass sheet (20) is arranged on top of the slab of natural stone (10).

4. Process according to any one of the preceding claims, **characterized in that** it also comprises the following steps:
f) spreading a layer (32) of resin over the surface (10b) of the stone slab (10) not joined to the glass sheet (20);
g) joining a second glass sheet or panel (24) onto the stone slab (10) in an environment under vacuum conditions;
h) hardening of the resin (32);
i) performing a cut along the mid plane of the thickness of the panel (50) thus formed as to obtain two panels (60), each of the said panels (60) being formed by a stone slab (10) joined to a glass sheet (20, 24).

5. Process according to any one of preceding claims, **characterized in that**, during step a), the surfaces (10a,10b) of the stone slab (10) to be joined to the glass sheet (20) are levelled so as to reduce the thickness of the resin layer (32) used and to ensure better bonding between the slab and sheet (10, 20) to be joined together.

6. Process according to Claim 5, **characterized in that**, during step a), after levelling the surfaces (10a,10b) of the stone slab (10) and before step c) for spreading the resin (32), the stone slab (10) is dried so as to eliminate any residual water.

7. Process according to Claim 6, **characterized in that**, after levelling and also before step f), the stone slab (10) is heated so as to accelerate hardening of the resin (32).

8. Process according to any one of the preceding claims, **characterized in that**, during step e), the degree of vacuum created has a value not greater than 30 mm Hg residual pressure.

9. Process according to any one of the preceding claims, **characterized in that** said glass sheet or panel (20, 24) to be joined to a stone slab (10) consists of stratified glass.

10. Process according to Claim 9, **characterized in that** the stratified glass (20,24) comprises at least two single sheets of glass (20a, 20b) which are bonded to one another by means of an intermediate layer of polymer (22) opaque to ultraviolet rays.

11. Process according to any one of the preceding claims, **characterized in that** the surface of said glass sheet or pane (20, 24) to be joined to said stone slab (10) is roughened so as to improve the adhesion between the said slab and sheet (10, 24) to be joined together.

12. Process according to Claim 11, **characterized in that** said surface of said glass sheet or panel (20, 24) is roughened by means of sandblasting.

13. Process according to any one of the preceding claims, **characterized in that** said hardening resin is an epoxy resin.

14. Process according to Claim 1, **characterized in that**:
- a sandwich assembly is prepared, said assembly consisting of a stone slab (10) having a layer of resin (32) spread over one (10a) of its surfaces and of a glass sheet or pane (20) lying on removable spacer supports (34) arranged between the facing surfaces (10a,20a) of the said slab and sheet (10,20) and being such as to keep the latter at a predetermined distance;
- said sandwich assembly is introduced into said environment under predetermined vacuum conditions, and
- finally said spacer supports (34) are removed so that said glass sheet (20) rests on the surface (10a) of said stone slab (10) provided with the layer of hardening resin.

15. Process according to Claim 14, **characterized in that** said spacer supports (34) are arranged along two longitudinal edges of said slab and sheet (10, 20).

16. Plant for the production of a composite panel, comprising:
- a station (52) where a sandwich assembly is obtained which comprises a slab of natural stone (10), a glass sheet or panel (20) and a layer (32) of hardening resin applied onto a surface either of said slab or of said sheet (10, 20) and
- a subsequent station (58) for hardening the resin,
**characterized in that** it comprises an intermediate station (54) which is able to keep the said sandwich assembly under vacuum conditions for the whole of the time during which the facing surfaces (10a, 20a) of the said slab and sheet (10, 20) between which the said layer of hardening resin (32) is situated are moved towards each other and brought into full contact.

17. Plant according to Claim 16, **characterized in that** the said intermediate station (54) comprises a bed (62) and a sealable bell (64) which can be lifted and is connected to a vacuum pump (66), the said pump starting to function after the said bell (64) has been brought from a raised position, in which said sandwich assembly is allowed to enter, into a lowered operative position.

18. Plant according to Claim 16 or 17, **characterized in that** said sandwich assembly also comprises spacer elements (34) able to keep the facing surfaces (10a,20a) of said slab and sheet (10,20) at a predetermined distance and **in that** said intermediate station (54) also comprises means (72) for removing said spacer elements (34).

19. Composite panel of natural stone and glass obtained according to any one of Claims 1 to 15 and/or by means of the plant according to any one of Claims 16 to 18.
